# EUROPEAN PATENT APPLICATION

(11) **EP 4 361 884 A1**
(43) Date of publication of application: **01.05.2024**
(21) Application number: 23749778.9
(22) Date of filing: 01.02.2023
(51) Int. Cl.: G06K 19/077, B65D 27/00, B65D 27/30, B65D 27/34, G09F 3/03

(54) **SENSING SHEET BODY**

(30) Priority: 04.02.2022 JP 2022016470
(71) Applicant: Kyocera Communication Systems Co. Ltd., Kyoto-shi, Kyoto 612-8450 (JP)
(72) Inventor: TERAKAWA, Naoki, Kyoto-shi, Kyoto 612-8450 (JP); SATO, Takuto, Kyoto-shi, Kyoto 612-8450 (JP); KATO, Shinobu, Kyoto-shi, Kyoto 612-8450 (JP)
(74) Representative: Von Rohr Patentanwälte Partnerschaft mbB
(86) International application number: PCT/JP2023/003180
(87) International publication number: WO 2023/149462

(57) **Abstract**

To provide a highly useful shipping/opening detection system. [Solution] A detection sheet body 10 is attached to a shipment. At the time of shipping, first sheet wiring 6 of the detection sheet body 10 is broken. As a result, shipping data are transmitted from a wireless transmission circuit 3 of the detection sheet body 10. The shipping data are recorded in a management server device 35. A recipient who receives the shipment breaks second sheet wiring 7 of the detection sheet body 10. As a result, opening data are transmitted from the wireless transmission circuit 3 of the detection sheet body 10. The opening data are recorded in the management server device 35. A user can therefore access the management server device 35 from a user terminal device 40 to understand the status of shipping and opening.

## Description

### TECHNICAL FIELD

The present invention relates to a technique of detecting shipping and opening.

### BACKGROUND ART

In order to detect illicit opening of a package by an unauthorized person, whether the package is opened by the authorized person, and the like, a system that detects opening of a shipment has been proposed.

For example, in Japanese Laid-open Patent Application 2018-169851 (JP2018169851A), a unit for detecting opening by using an RFID chip is disclosed. When a pattern of the unit is connected by opening of the package, data emitted by the RFID chip is changed, which allows to determine whether the package has been opened or has not yet been opened.

In Japanese Laid-open Patent Application 2021-124838 (JP2021124838A), the following system is disclosed. A content is packaged, presence or absence of the content is determined by using a capacitance sensor, and the determination result is transmitted to a server apparatus by wireless communication. By accessing the server apparatus via the Internet, a user can find out whether the package has been opened, and the content has been taken out.

### SUMMARY OF INVENTION

### Problem to be Solved by the Invention

However, the conventional detection technique as described above has the following problems.

Since the RFID is used as near-field communication in JP2018169851A, the user has to prepare an RFID reader, and such a technique cannot easily be used.

Meanwhile, in the technique disclosed in JP2021124838A, the presence or the absence of the content, which is determined by using the capacitance sensor, is transmitted to the server apparatus by wireless transmission. Thus, it is possible to find out whether the package has been opened when a smartphone or a personal computer (PC) with the Internet access is available. However, the capacitance sensor has to be always driven to detect whether the package has been opened, which drains a battery.

An activation switch is pressed to use the sensor, so as to prevent drainage of the battery when not in use. However, when it is forgotten to press the activation switch, it is impossible to detect opening of the package. In addition, it has not been devised to easily activate the sensor while preventing pressing of the activation switch from being forgotten.

The present invention has been made to solve the problem(s) as described above, and therefore has a purpose of providing a highly useful shipment opening detection technique.

### Means to Solve the Problems

Several features of the present invention, each of which is independently applicable, will be listed.
(1) A detection sheet body according to the present invention includes: a wireless transmission circuit that is provided on a breakable thin board to transmit a status signal to a mobile communication base station; a control circuit that is provided on the thin board, controls and causes the wireless transmission circuit to transmit a state signal indicating shipping according to a voltage applied to a first terminal, and controls and causes the wireless transmission circuit to transmit a state signal indicating opening according to a voltage applied to a second terminal; a battery cell that is provided on the thin board to supply the voltage to the wireless transmission circuit and the control circuit; first sheet wiring that is provided on the thin board to connect the first terminal and the battery cell; second sheet wiring that is provided on the thin board to connect the second terminal and the battery cell; a first breaking structure that is provided to the thin board in order to fluctuate the voltage of the first terminal by cutting the first sheet wiring; and a second breaking structure that is provided to the thin board in order to fluctuate the voltage of the second terminal by cutting the second sheet wiring.
   Therefore, it is possible to detect shipping and opening with a simple operation. In addition, since the detection is made by physical breakage, it is easy to grasp a condition from external appearance.
(2) The detection sheet body according to the present invention is characterized in that, the thin board is paper or a film made from a synthetic resin, each of the first sheet wiring and the second sheet wiring is printed wiring that is formed by printing on the paper or the film made from the synthetic resin, and each of the first breaking structure and the second breaking structure is a perforation line provided to the paper or the printed wiring.
   Therefore, special equipment is unnecessary to break the breaking structure, which facilitate handling.
(3) The detection sheet body according to the present invention is characterized in that, the printed wiring is formed near the perforation line in a manner to be wide in an extending direction of the perforation line.
   Therefore, there is no risk that the perforation line reduces conductivity of the printed wiring.
(4) The detection sheet body according to the present invention is characterized in that, an electrode that is connected to ground is formed on the thin board, which is cut off by the first breaking structure, and the thin board, which is cut off by the second breaking structure.
   Therefore, even when a finger or the like touches the electrode at the time of breaking the thin board, noise is less likely to occur, and thus erroneous operation can be prevented.
(5) The detection sheet body according to the present invention is characterized in that, the electrode that is connected to the ground is configured to have a linear pattern.
   Therefore, it is possible to prevent the noise by reducing an effect on an antenna.
(6) The detection sheet body according to the present invention is characterized in that, a code that is formed by coating a mark for identifying the detection sheet body is printed on the thin board that is cut off by the first breaking structure.
   Therefore, it is possible to affix the cut code to a shipping object for management.
(7) In the detection sheet body according to the present invention, a perforation line structure as the first breaking structure and a perforation line structure as the second breaking structure are provided in different directions, and the perforation line structure as the second breaking structure is configured that at least one end thereof does not reach an edge of the paper but reaches a new edge that is formed by removing a part of the paper by the perforation line structure as the first breaking structure.
   Therefore, the second breaking structure is less likely to be broken, and it is thus possible to easily acknowledge occurrence of such erroneous use that a package is shipped without the first breaking structure being broken.
(8) In an envelope according to the present invention, the detection sheet body is fixed such that the breaking structure for opening overlaps the perforation line structure as the second breaking structure of the detection sheet body.
   Therefore, at the time of opening the envelope, the second breaking structure is broken simultaneously, and it is thus possible to detect opening.
(9) In a container according to the present invention, the detection sheet body is fixed such that, when a lid is opened, the perforation line structure as the second breaking structure of the detection sheet body is broken.
   Therefore, at the time of opening the container, the second breaking structure is broken simultaneously, and it is thus possible to detect opening.
(10) The detection sheet body according to the present invention is characterized in that, each of the first terminal and the second terminal is a hardware interrupt terminal, and the control circuit only monitors the hardware interrupt terminal until a predetermined signal is input to the hardware interrupt terminal.
   Therefore, long-time operation can be achieved by suppressing drainage of the battery cell.
(11) The detection sheet body according to the present invention is characterized in that, in a period from transmission of the state signal indicating shipping to transmission of at least the state signal indicating opening, the control circuit controls and causes the wireless transmission circuit to transmit, at predetermined time intervals, a state signal indicating that the detection sheet body is operated.
   Therefore, it is possible to check whether the detection sheet body is operated properly after shipping.
(12) The detection sheet body according to the present invention is characterized in that, in a period from transmission of the state signal indicating shipping to transmission of at least the state signal indicating opening, the control circuit controls and causes the wireless transmission circuit to transmit, at predetermined time intervals, a state signal that is used to estimate a current location of the detection sheet body.
   Therefore, after shipping, it is possible to acknowledge at which location the detection sheet body is present.
(13) The detection sheet body according to the present invention is characterized in that, the detection sheet body further includes a sensor that measures environment around the detection sheet body, and in a period from transmission of the state signal indicating shipping to transmission of at least the state signal indicating opening, the control circuit controls and causes the wireless transmission circuit to transmit, at predetermined time intervals, a state signal indicating a measurement result by the sensor.
   Therefore, it is possible to detect surrounding environment during shipping.
(14) (15) A state detection system according to the present invention includes: a detection sheet body that is accommodated in or fixed to a container and has a wireless transmission circuit; and a server apparatus capable of directly or indirectly acquiring a state signal from the wireless communication circuit, in which
   the detection sheet body includes: the wireless transmission circuit that is provided on a breakable thin board to transmit a status signal to a mobile communication base station; a control circuit that is provided on the thin board, controls and causes the wireless transmission circuit to transmit a state signal indicating shipping according to a voltage applied to a first terminal, controls and causes the wireless transmission circuit to transmit a state signal indicating opening according to a voltage applied to a second terminal, and controls and causes the wireless transmission circuit to transmit, at predetermined time intervals, a state signal used to estimate a current location of the detection sheet body in a period from transmission of the state signal indicating shipping to transmission of at least the state signal indicating opening; a battery cell that is provided on the thin board to supply the voltage to the wireless transmission circuit and the control circuit; first sheet wiring that is provided on the thin board to connect the first terminal and the battery cell; second sheet wiring that is provided on the thin board to connect the second terminal and the battery cell; a first breaking structure that is provided to the thin board in order to fluctuate the voltage of the first terminal by cutting the first sheet wiring; and a second breaking structure that is provided to the thin board in order to fluctuate the voltage of the second terminal by cutting the second sheet wiring, and
   the server apparatus includes: shipping recording means for receiving the state signal indicating shipping and recording, in a recording section, that the detection sheet body is in a shipped state in association with the detection sheet body along with date and time; transportation recording means for recording, in the recording section, that the detection sheet body is in a transported state in association with the detection sheet body along with a current location, which is based on a state signal used to estimate the current location, and the date and time in a period from reception of the state signal indicating shipping to reception of the state signal indicating opening; opening recording means for receiving the state signal indicating opening and recording, in the recording section, that the detection sheet body is in an opened state in association with the detection sheet body along with the date and time; and transmission means for transmitting a state of the detection sheet body recorded in the recording section to a terminal apparatus.

Therefore, it is possible to detect time of shipping, the current location, and time of opening with a simple operation.

A "device" is a concept that includes not only one computer but also plural computers connected via a network or the like. Thus, in the case where the means (or even some of the means) of the present invention is distributed across the plural computers, these plural computers correspond to the device.

A "program" is a concept that includes not only a program directly executable by a CPU but also a source program, a compressed program, an encrypted program, a program whose function is implemented in cooperation with an operating system, and the like.

### BRIEF DESCRIPTION OF DRAWINGS

FIG. 1 illustrates a configuration of a state detection system using a detection sheet body 10 according to an embodiment of the present invention.
FIG. 2 illustrates a hardware configuration of a control circuit 4 in the detection sheet body 10.
FIG. 3 illustrates a structure of the detection sheet body 10.
FIG. 4 is a circuit diagram of the detection sheet body 10.
FIG. 5 is a view illustrating the detection sheet body 10 that is affixed to an envelope 70.
FIG. 6 illustrates a hardware configuration of a management server apparatus 35.
FIG. 7 is a flowchart of state detection processing.
FIG. 8 includes tables illustrating a transmission data structure.
FIG. 9 is a view for explaining location detection by LPWA radio waves.
FIGs. 10A, 10B, 10C are tables, each of which illustrates recorded state data.
FIG. 11 is a flowchart of the state detection processing.
FIG. 12 is a flowchart of the state detection processing.
FIG. 13 is a table illustrating the recorded state data.
FIG. 14 is a table illustrating the recorded state data.
FIG. 15 illustrates a structure of the detection sheet body 10 according to another example.
FIGs. 16A and 16B are views, each of which illustrates attachment of the detection sheet body 10 to a cardboard box.
FIG. 17 illustrates a structure of the detection sheet body 10 according to further another example.
FIG. 18 illustrates a structure of the detection sheet body 10 according to further another example.
FIG. 19 illustrates details of a circuit pattern of the detection sheet body 10.
FIG. 20 is a view illustrating a cover PPS that is affixed to a circuit portion of the detection sheet body 10.
FIGs. 21A and 21B are views illustrating an example in which the detection sheet body 10 is affixed to the cardboard box for use.
FIG. 22 is a view illustrating another usage example of the detection sheet body 10.

### DESCRIPTION OF EMBODIMENTS

### 1. System Configuration

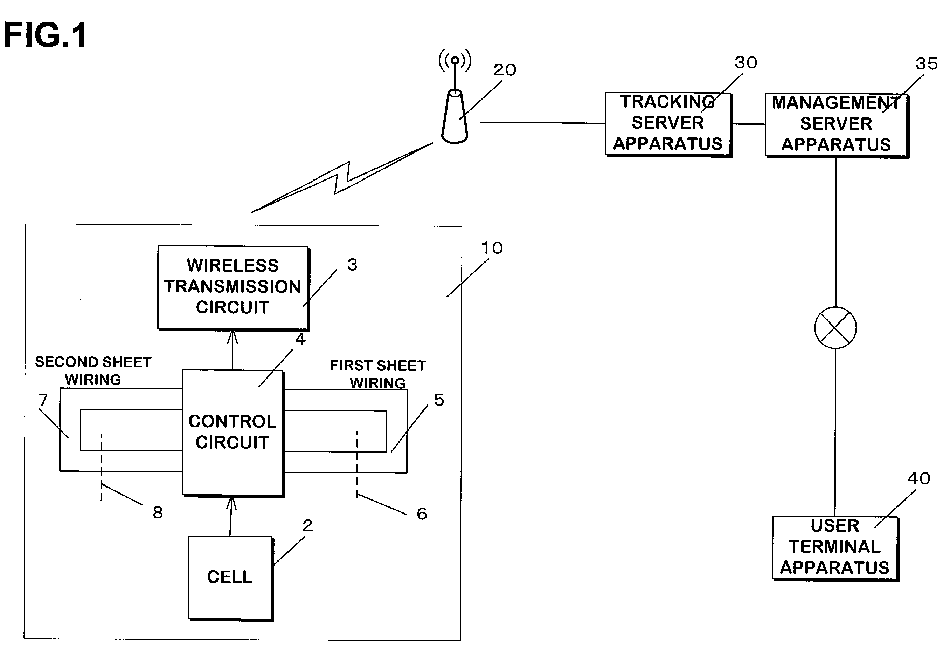

FIG. 1 illustrates an overall configuration view of a shipment opening detection system using a detection sheet body 10 according to an embodiment of the present invention. The detection sheet body 10 is affixed to a portion to be opened of an envelope or a container that accommodates a shipping object.

After accommodating the shipping object, a user breaks a first breaking structure 6 and cuts first sheet wiring 5. As a result, a voltage at a first terminal of a control circuit 4 fluctuates. In response to this voltage fluctuation, the control circuit 4 commands a wireless communication circuit 3 to transmit a state signal indicating shipping. The wireless communication circuit 3 then transmits the state signal indicating shipping.

This state signal is received by a mobile radio base station 20 and is recorded in a tracking server apparatus 30. A management server apparatus 35 acquires data that is recorded in the tracking server apparatus 30. In this way, the management server apparatus 35 determines and records that the detection sheet body 10 adhering to the envelope or the container accommodating the shipping object is brought into a shipped state.

When the envelope or the container accommodating the shipping object is delivered to a destination by a shipping company or the like, and a recipient opens the envelope or the container, a second breaking structure 8 of the detection sheet body 10 is broken. As a result, second sheet wiring 7 is cut, and a voltage at a second terminal of the control circuit 4 fluctuates. In response to this voltage fluctuation, the control circuit 4 commands the wireless communication circuit 3 to transmit a state signal indicating opening. The wireless communication circuit 3 then transmits the state signal indicating opening.

This state signal is received by the mobile radio base station 20 and is recorded in the tracking server apparatus 30. The management server apparatus 35 acquires the data that is recorded in the tracking server apparatus 30. In this way, the management server apparatus 35 determines and records that the detection sheet body 10 adhering to the envelope or the container accommodating the shipping object is brought into an opened state.

As it has been described so far, the state signal recorded in the management server apparatus 35 can be accessed and viewed from a user terminal apparatus 40. Thus, it is possible to easily confirm that the envelope or the container has been shipped and opened.

In this embodiment, each thin board has a portion to be broken at two locations, one for shipping and the other for opening. In this way, simple action of breakage suffices at the time of shipping and opening, and furthermore, physical breakage can easily be confirmed.

### 2. Hardware Configuration and Structure

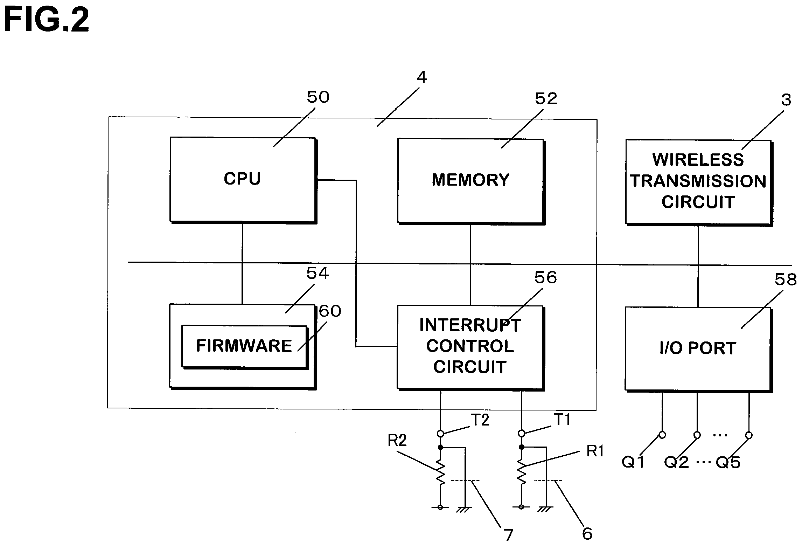

FIG. 2 illustrates hardware configurations of the wireless transmission circuit 3 and the control circuit 4. Memory 52, non-volatile memory 54, an interrupt control circuit 56, an I/O port 58, and the wireless communication circuit 3 are connected to a CPU 50 of the control circuit 4. In this embodiment, a wireless communication circuit that conforms to an LPWA standard such as Sigfox^{®} is used.

Firmware (a control program) 60 is recorded in the non-volatile memory 54. This firmware 60 is written by using terminals Q1 ... Q5 via the I/O port 58.

A first terminal T1 of the interrupt control circuit 56 is supplied with a cell voltage via a resistor R1 and is connected to the ground. Similarly, a second terminal T2 is supplied with the cell voltage via a resistor R2 and is connected to the ground. Thus, the terminals T1, T2 are kept at a ground potential (L). When a pattern to the ground is cut by the breaking structures 6, 8, voltages at terminals T1, T2 is changed to the cell voltage (H).

When the voltage of each of the first terminal T1 and the second terminal T2 is changed from L (the low voltage) to H (the high voltage), the interrupt control circuit 56 gives an interrupt signal to the CPU 50. When receiving the interrupt signal, the CPU 50 stops a previous operation mode or previous processing and executes predetermined processing (a hardware interrupt). In this embodiment, when receiving the interrupt signal, the CPU 50, which has been in a sleep mode, enters a normal mode and executes the predetermined processing.

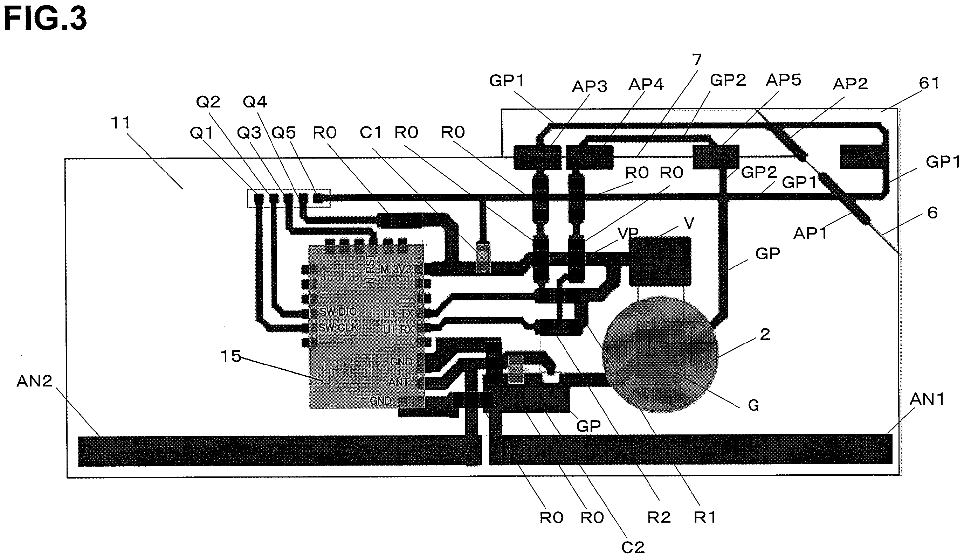

FIG. 3 illustrates a structure of the detection sheet body 10. Antennas AN1, AN2, an anode pad G, a cathode pad V, and a circuit pattern are printed on a thin board 11, which is formed of paper, by conductive ink. A button cell 2 is placed on the anode pad G such that an anode of the button cell 2 comes into contact with the anode pad G. An adhesive tape, an adhesive surface of which is conductive, connects a cathode of this button cell 2 and the cathode pad V and thereby fixes the button cell 2 to the thin board 11.

In this embodiment, a module 15 (IFS-M01 manufactured by Innovation Farm, Inc.) that incorporates the control circuit 4 and the wireless communication circuit 3 is used. A terminal of the module 15 and the circuit pattern are electrically connected and fixed by a conductive adhesive.

A ground pattern GP extends from the anode pad G and is branched into a ground pattern GP1 as first sheet wiring and a ground pattern GP2 as second sheet wiring. The ground pattern GP1 is connected to an interrupt terminal U1TX of the module 15 as a first terminal via margin patterns AP1, AP2, AP3. FIG. 3 illustrates an electrical conductor R0 provided across the patterns.

The cathode of the button cell 2 is connected to this interrupt terminal U1TX via a power supply pattern VP, which extends from the cathode pad V, and a resistor R1. A perforation line 6 as the first breaking structure is formed across the ground pattern GP1 along the margin patterns AP1, AP2 by zipping. Each of the margin patterns AP1, AP2 is formed along the perforation line 6 in a manner to be wider than the ground pattern GP1 and prevents poor conduction due to the perforation line 6.

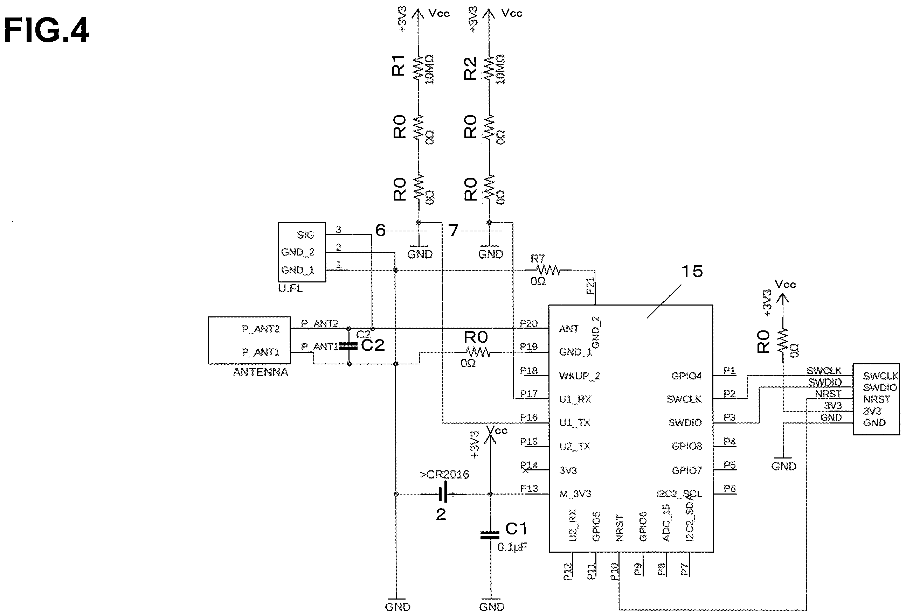

Thus, as illustrated in a circuit diagram in FIG. 4, the interrupt terminal U1TX is kept at "L" unless the thin board 11 is torn off along the perforation line 6. When the thin board 11 is torn off at the perforation line 6, and the ground pattern GP1 is cut, the cell voltage is applied to the interrupt terminal U1TX via the resistor R1, and the voltage of the interrupt terminal U1TX becomes "H".

The ground pattern GP2 is connected to an interrupt terminal U1RX of the module 15 as the second terminal via margin patterns AP5, AP4. In addition, the cathode of the button cell 2 is connected to this interrupt terminal U1RX via the power supply pattern VP extending from the cathode pad V and a resistor R2. A perforation line 7 as the second breaking structure is formed across the ground pattern GP2 along the margin patterns AP3, AP4, AP5 by zipping. Each of the margin patterns AP3, AP4, AP5 is formed along the perforation line 7 in a manner to be wider than the ground pattern GP2 and prevents the poor conduction due to the perforation line 7.

In this embodiment, directions of formation of the perforation line 6 and the perforation line 7 differ from each other. In addition, the perforation line 7 is formed until contacting the perforation line 6 but not formed beyond the perforation line 6. In this way, when a part of the thin board 11 is removed along the perforation line 6, an end of the perforation line 7 appears on an outer periphery of the thin board 11. This promotes tearing along the perforation line 7 after the thin board 11 is torn off along the perforation line 6.

As illustrated in the circuit diagram in FIG. 4, the interrupt terminal U1RX is kept at "L" unless the thin board 11 is torn off at the perforation line 7. When the thin board 11 is torn off at the perforation line 7, and the ground pattern GP2 is cut, the cell voltage is applied to the interrupt terminal U1RX via the resistor R2, and the voltage of the interrupt terminal U1RX becomes "H".

The antennas AN1, AN2 are also formed as printed patterns. The antenna AN1 is connected to the ground pattern GP, and the antenna AN2 is connected to an antenna terminal ANT (is connected to an antenna terminal of the wireless transmission circuit 3) of the module 15. A capacitor C2 is provided between the ground pattern GP, to which the antenna AN1 is connected, and the pattern, to which the antenna AN2 is connected.

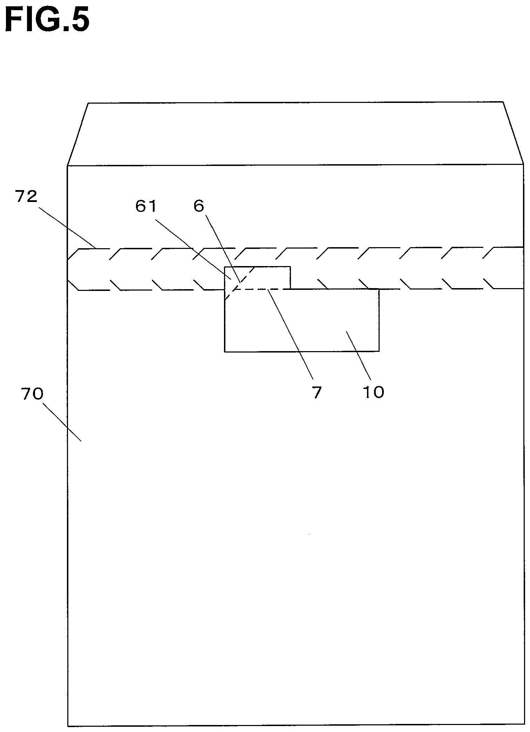

FIG. 5 illustrates a zippered envelope 70 to which the detection sheet body 10 is affixed. This envelope 70 includes a zipper 72 for the recipient to open the envelope 70. As illustrated in FIG. 5, the zipper 72 is formed of discontinuous cuts and allows easy opening from a left side along the cuts at the time of opening. The detection sheet body 10 is affixed such that the perforation line 7 of the detection sheet body 10 is placed along the cuts of the zipper 72. A triangular area 61 formed by the perforation line 6 is not affixed to the envelope 70 and thus can be peeled off.

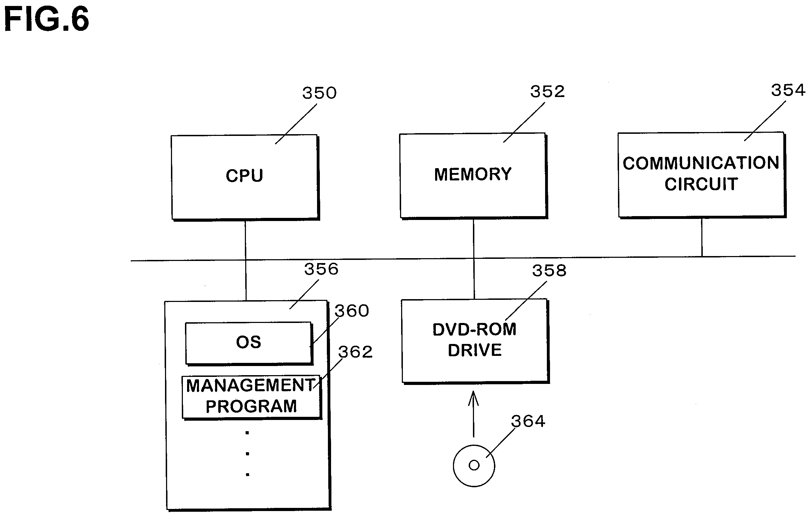

FIG. 6 illustrates a hardware configuration of the management server apparatus 35 that has been described with reference to FIG. 1. Memory 352, a communication circuit 354, an SSD 356, and a DVD-ROM drive 358 are connected to a CPU 350. The communication circuit 354 is a circuit for connection to the Internet.

An operating system 360 and a management program 362 are recorded in the SSD 356. The management program 362 cooperates with the operating system 360 to implement a function thereof. These programs are recorded in a DVD-ROM 364 and are installed in the SSD 356 via the DVD-ROM drive 358.

The tracking server apparatus 30 has substantially the same hardware configuration. In this embodiment, a server apparatus provided by Sigfox S.A. on the Internet is used as the tracking server apparatus 30.

As the user terminal apparatus 40, a normal PC connectable to the Internet can be used. A basic hardware configuration thereof is similar to that in FIG. 6 but preferably includes a display, a mouse/a keyboard, and the like.

### 3. State Detection Processing

Hereinafter, a description will be made on state detection processing using the envelope 70 illustrated in FIG. 5.

### 3.1 Processing Before Shipping

Before adhesion to the envelope 70, a terminal of the module 15, in which the firmware 60 is written, is bonded to paper (the thin board 11) printed with the pattern by the conductive adhesive. Thereafter, the button cell 2 is connected by the conductive adhesive and a conductive seal. As a result, the power is supplied to the circuit.

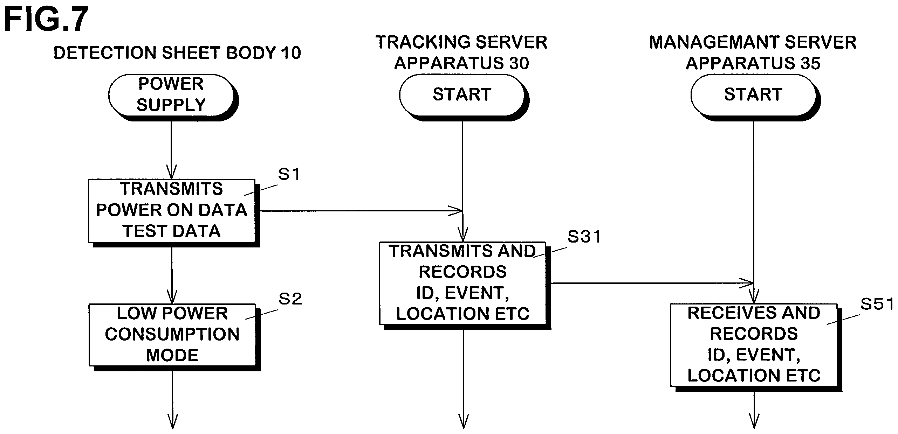

FIG. 7 illustrates a processing flowchart of the firmware 60 after the button cell 2 is attached and the power is supplied. When the firmware 60 is activated by the power supply, the CPU 50 of the control circuit 4 in the detection sheet body 10 (hereinafter may be abbreviated as the control circuit 4) controls the wireless transmission circuit 3 and commands the wireless transmission circuit 3 to transmit power ON data and test data (step S1). In response thereto, the wireless transmission circuit 3 transmits the power ON data and the test data. In this embodiment, an LPWA wireless communication radio wave is modulated and transmitted by transmission data.

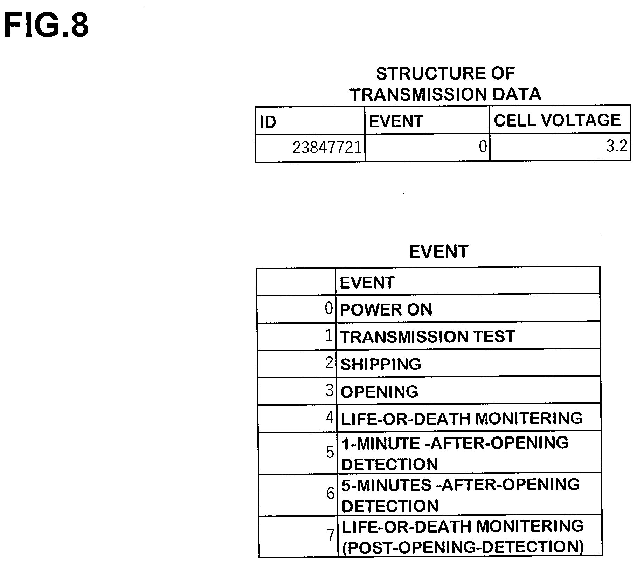

FIG. 8 illustrates a structure of the transmitted data that is transmitted from the wireless transmission circuit 3. ID is an identification code that is uniquely assigned to the detection sheet body 10, and is pre-recorded in the module 15 at the time of manufacture. EVENT is data that indicates a state of the detection sheet body 10, and the state is mapped from 0 to 7 as illustrated in an event correspondence table. CELL VOLTAGE is data that indicates a voltage of the button cell 2 that is detected by a sensor built into the module 15.

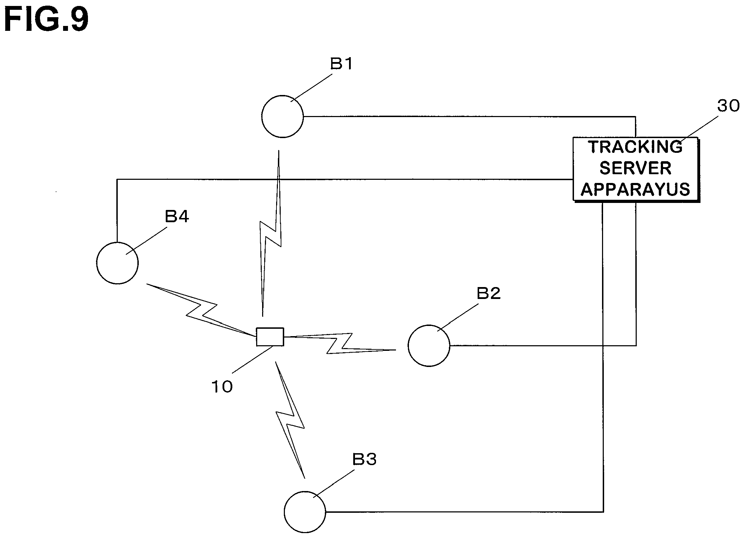

The LPWA radio wave that is transmitted from the wireless transmission circuit 3 is received by a base station near the detection sheet body 10 among base stations established in various locations. FIG. 9 illustrates a relationship among the detection sheet body 10, base stations B1 to B4, and the tracking server apparatus 30. The radio wave from the wireless transmission circuit 3 of the detection sheet body 10 is received by the base stations B 1, B2, B3, B4. At each of the base stations B 1 to B4, the data is demodulated from the received radio wave and is transmitted to the tracking server apparatus 30 along with radio wave strength at the time of the reception.

The tracking server apparatus 30 receives these pieces of the data (the ID, the event, the cell voltage, received date and time, and the like) and transmits the data to the management server apparatus 35 (step S31). At this time, a location and location accuracy (an error radius) of the detection sheet body 10 are calculated on the basis of the radio wave strength received at each of the base stations B1 to B4, and these types of information are also transmitted to the management server apparatus 35. The accuracy of the calculated location depends on the number of the base stations used for the calculation. In other words, in the case where the estimation is made on the basis of the radio wave strength from a large number of the base stations, the location accuracy is improved. On the other hand, in the case where the estimation is made on the basis of the radio wave strength from a small number of the base stations, the location accuracy is degraded.

Such accuracy that is determined by the number of the base stations or the like is calculated as the error radius. Roughly speaking, the correct location is within the error radius that is centered on the calculated location.

The CPU 350 of the management server apparatus 35 (hereafter may be abbreviated as the management server apparatus 35) receives the ID, the received date and time, the event, the cell voltage, and the location from the tracking server apparatus 30, and records these pieces of the data as the state data in the SSD 356 (step S51).

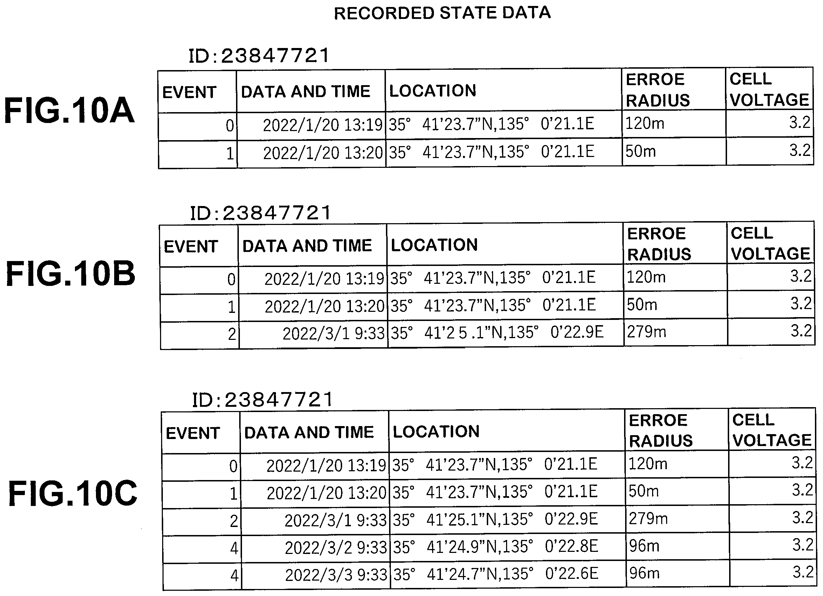

FIG. 10A illustrates the recorded state data. For each of the detection sheet body 10 (that is, for each of the IDs), an event type, occurred date and time (received date and time by the tracking server apparatus 30), the location, and the cell voltage are recorded. In FIG. 10A, transmission of the power ON data and the test data is recorded as the event.

A manufacturer can view this state data by operating a manufacturer terminal apparatus (not illustrated) to access the management server apparatus 35 via the Internet. Thus, in the case where, despite the installation of the button cell 2, the event related to the power ON data and the test data is not recorded, or the cell voltage is lower than a predetermined value, the manufacturer can acknowledge that the module 15 is defective.

After transmitting the data in step S1, the control circuit 4 of the detection sheet body 10 enters a low power consumption mode (a sleep mode) (step S2). In the low power consumption mode, the CPU 50 does not substantially execute processing other than the processing to accept the interrupt, and thereby reduces drainage of the button cell 2.

As illustrated in FIG. 5, the detection sheet body 10, to which the button cell 2 is attached as described above, is affixed to the envelope 70 by the user or the manufacturer.

### 3.2 Processing After Shipping and Before Opening

After accommodating the content such as a document in the envelope 70, the user seals the envelope 70 and cuts the detection sheet body 10 on the perforation line 6 to remove the triangular area (a removal area) 61. Since the triangular area 61 is removed, a person can easily and visually confirm that the envelope 70 has been dispatched.

In this way, the ground pattern GP1 is cut off, which changes the voltage of the first terminal T1 (the terminal U1TX) from "L" to "H". The interrupt control circuit 56 in FIG. 2 detects such a change and gives an interrupt command by the terminal T1 to the CPU 50.

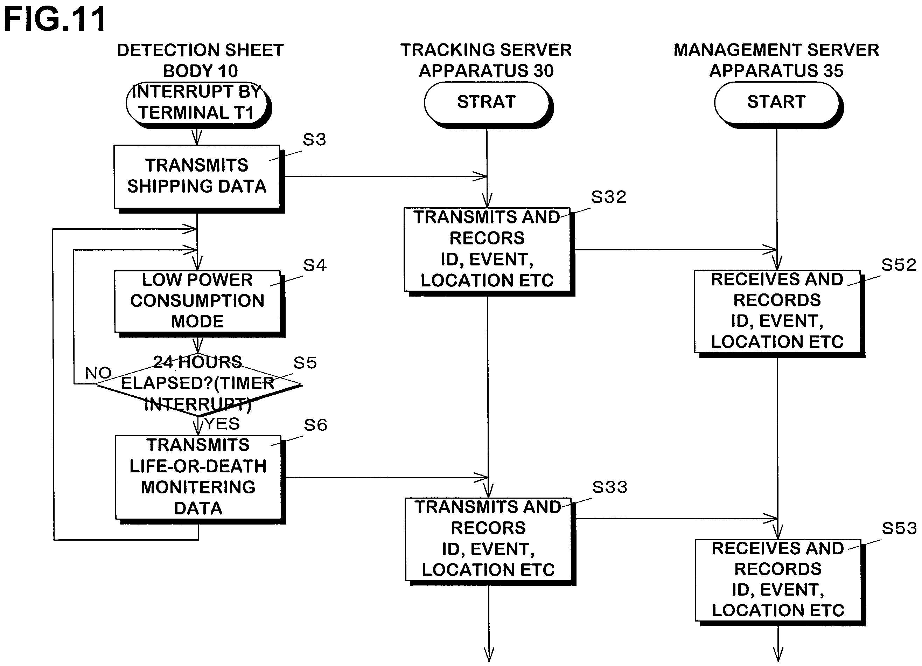

FIG. 11 illustrates a flowchart of interrupt processing by the terminal T1. When the interrupt command is given by the terminal T1 (the terminal U1TX), the CPU 50 stops the low power consumption mode and enters the normal operation mode. Then, the CPU 50 commands the wireless transmission circuit 3 to transmit shipping data (step S3). In response thereto, the wireless transmission circuit 3 transmits the transmission data (see FIG. 8) with the event being "2" by the LPWA wireless radio wave.

The tracking server apparatus 30 acquires the shipping data via the base station, adds the date and time, the location, and the error radius thereto, and transmits the data to the management server apparatus 35 (step S32). The management server apparatus 35 receives and records the data in the SSD 356 (step S52). FIG. 10B illustrates the recorded shipping data. The date and time, the location, and the like are recorded along with the event indicating shipping.

As described above, after the user cuts the detection sheet body 10 on the perforation line 6, the envelope 70 is carried as a mail or a package by a carrier to the destination.

After transmitting the radio wave that carries the shipping data, the control circuit 4 of the detection sheet body 10 enters the low power consumption mode (the sleep mode) (step S4). Also, in this low power consumption mode, the CPU 50 does not execute the processing other than the processing to accept the interrupt, and thereby reduces drainage of the button cell 2. However, in the interrupt processing by terminal T1, in addition to acceptance of the interrupt processing by the terminal T2, the time is measured by an internal timer provided in the CPU 50. Then, a timer interrupt is executed every time a predetermined time elapses.

When the predetermined time (24 hours herein) has elapsed since the transmission of the shipping data, the CPU 50 executes the processing by the timer interrupt (the processing is executed by the interrupt processing although the processing is illustrated as branch processing in the flowchart in order to facilitate understanding). With this interrupt, the CPU 50 is resumed from the low power consumption mode to the normal mode. Then, the CPU 50 commands the wireless transmission circuit 3 to transmit the state data with the event being "4", that is, life-or-death monitoring data (step S6). In response thereto, the wireless transmission circuit 3 transmits the life-or-death monitoring data with the event being "4" by the LPWA wireless radio wave.

The tracking server apparatus 30 acquires the shipping data via the base station, adds the date and time and the location thereto, and transmits the data to the management server apparatus 35 (step S33). The management server apparatus 35 receives and records the data in the SSD 356 (step S53). FIG. 10C illustrates the recorded shipping data. The date and time, the location, and the like are recorded along with the event indicating shipping.

After transmitting the life-or-death monitoring data, the CPU 50 enters the low power consumption mode again (step S4). Then, by the timer interrupt, the CPU 50 executes control to transmit the life-or-death monitoring data every predetermined time (24 hours herein). Thus, as illustrated in FIG. 10C, after the perforation line 6 is cut, the location of the detection sheet body 10 is tracked and recorded in the management server apparatus 35 every 24 hours. The state data that is recorded in the management server apparatus 35 can be viewed from the user terminal apparatus 40 via the Internet. Thus, the user can find out where the shipped envelope is currently located. For viewing, the management server apparatus 35 may provide a display screen that shows the location of the detection sheet body 10 on a map on the basis of a latitude and a longitude.

### 3.3 Processing after Opening

Next, when the envelope 70 arrives at the shipping destination, and the recipient opens the zipper 72 to remove the content, the perforation line 7 on the detection sheet body 10 is cut at the same time as illustrated in FIG. 5.

In this way, the ground pattern GP2 is cut off, which changes the voltage of the second terminal T2 (the terminal U1RX) from "L" to "H". The interrupt control circuit 56 in FIG. 2 detects such a change and gives an interrupt command by the terminal T2 to the CPU 50.

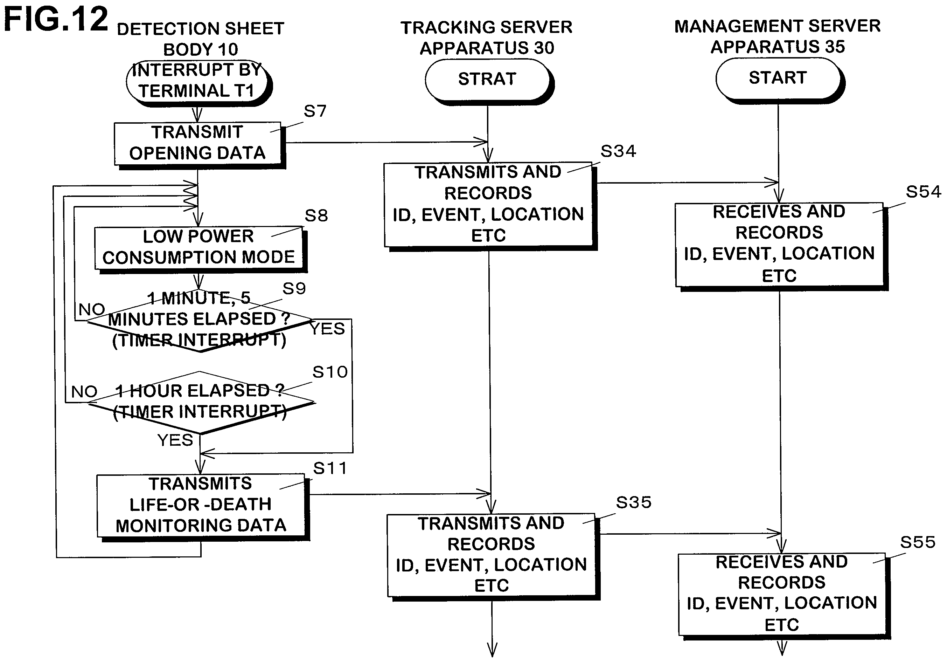

FIG. 12 illustrates a flowchart of interrupt processing by the terminal T2. When the interrupt command is given by the terminal T2 (the terminal U1RX), the CPU 50 stops the low power consumption mode and enters the normal operation mode. Then, the CPU 50 commands the wireless transmission circuit 3 to transmit opening data (step S7). In response thereto, the wireless transmission circuit 3 transmits the transmission data (see FIG. 8) with the event being "3" by the LPWA wireless radio wave.

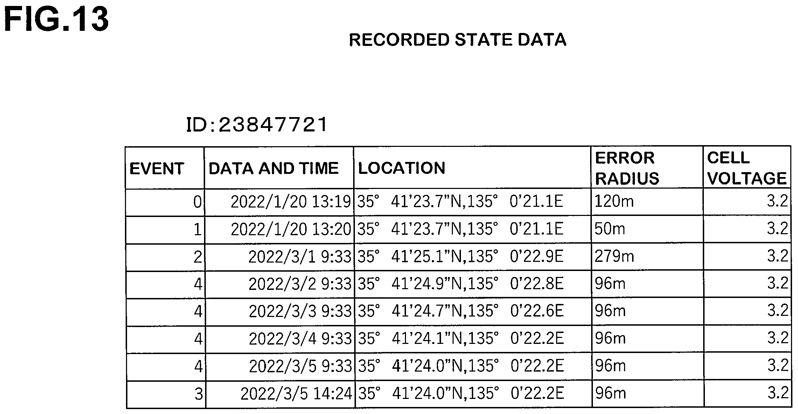

The tracking server apparatus 30 acquires the opening data via the base station, adds the date and time and the location thereto, and transmits the data to the management server apparatus 35 (step S34). The management server apparatus 35 receives and records the data in the SSD 356 (step S54). FIG. 13 illustrates the recorded opening data. The date and time, the location, and the like are recorded along with the event "3" indicating opening. Thus, by operating the user terminal apparatus 40 to access the management server apparatus 35, the user can confirm that the envelope 70 has not only arrived but has also been opened by the recipient.

After transmitting the radio wave that carries the opening data, the control circuit 4 of the detection sheet body 10 enters the low power consumption mode (the sleep mode) (step S8). Also, in this low power consumption mode, the CPU 50 does not execute the processing other than the processing to accept the interrupt, and thereby reduces drainage of the button cell 2. However, in the interrupt processing by terminal T2, the time is measured by the internal timer provided in the CPU 50. Then, the timer interrupt is executed every time a predetermined time elapses.

When the predetermined time (one minute herein) has elapsed since the transmission of the opening data, the CPU 50 executes the processing by the timer interrupt. With this interrupt, the CPU 50 is resumed from the low power consumption mode to the normal mode. Then, the CPU 50 commands the wireless transmission circuit 3 to transmit the state data with the event being "5", that is, one-minute-after-opening detection data (step S11). In response thereto, the wireless transmission circuit 3 transmits the one-minute-after-opening detection data with the event being "5" by the LPWA wireless radio wave.

The tracking server apparatus 30 acquires the shipping data via the base station, adds the date and time and the location thereto, and transmits the data to the management server apparatus 35 (step S35). The management server apparatus 35 receives and records the data in the SSD 356 (step S55).

After transmitting the one-minute-after-opening detection data, the CPU 50 enters the low power consumption mode again (step S8).

Next, when a predetermined time (four minutes herein) has elapsed since the transmission of the one-minute-after-opening detection data, the CPU 50 executes the processing by the timer interrupt. With this interrupt, the CPU 50 is resumed from the low power consumption mode to the normal mode. Then, the CPU 50 commands the wireless transmission circuit 3 to transmit the state data with the event being "6", that is, five-minutes-after-opening detection data (step S 11). In response thereto, the wireless transmission circuit 3 transmits the five-minutes-after-opening detection data with the event being "6" by the LPWA wireless radio wave.

The tracking server apparatus 30 acquires the shipping data via the base station, adds the date and time and the location thereto, and transmits the data to the management server apparatus 35 (step S35). The management server apparatus 35 receives and records the data in the SSD 356 (step S55).

After transmitting the five-minutes-after-opening detection data, the CPU 50 enters the low power consumption mode again (step S8). Thereafter, every predetermined time (every hour herein), the post-opening-detection life-or-death monitoring data is transmitted by the timer interrupt (step S11). This data is also recorded in the management server apparatus 35 via the tracking server apparatus 30.

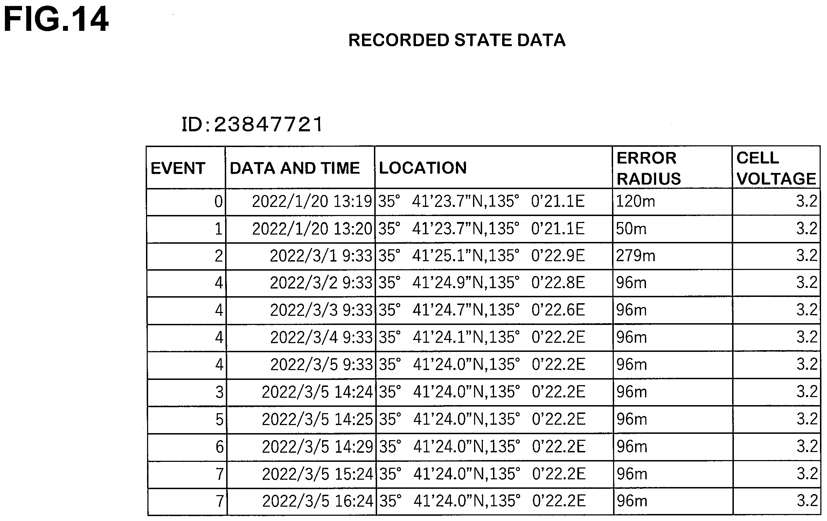

FIG. 14 illustrates the state data that is recorded as described above. A reason why the state data keeps being transmitted after the transmission of the opening data is because, even in the case where the opening data is not received for some reason, it is possible to acknowledge opening by receiving the subsequent data.

In addition, it is possible to learn disposal behavior of a consumer by recording to which location the envelope 70 moves after being opened. Such information can be used for marketing that is associated with incineration of garbage, the disposal behavior, and the like.

Thereafter, the state data keeps being transmitted until the detection sheet body 10 stops being operated due to running out of the button cell 2 of the detection sheet body 10 or destruction of the detection sheet body 10.

As it has been described so far, it is possible to easily detect shipping and opening and to detect the dispatch time and location, the shipping time and location, a delivery status, opened time, the location, and the like of the detection sheet body 10 itself.

In the case where cutting of the perforation line 6 is forgotten at the time of the dispatch, the perforation line 7 is cut off at the time of opening, and opening is thereby detected after shipping. As illustrated in FIG. 3, such a pattern is configured that, regardless of whether the perforation line 6 in a non-cut state is torn from left or right, the voltage of the first terminal becomes "H" before the voltage of the second terminal becomes "H". This is because a portion to be cut of the first terminal is provided to both sides of a portion to be cut of the second terminal.

Thus, the operation is performed even when cutting of the perforation line 6 is forgotten at the time of the shipping. However, since a time difference between shipping and opening is recorded to be extremely small, it is possible to acknowledge that cutting of the perforation line 6 has been forgotten at the time of the shipping and that actual shipping timing is prior to the recorded date and time.

### 3.4 Writing to Firmware

The above description has been made that the firmware 60 has already been written in the control circuit 4. Hereinafter, a description will be made on writing processing of the firmware 60.

The module 15 preferably writes the firmware 60 by itself. For writing, the voltage is applied between a power supply terminal M3V3 and a ground terminal GND illustrated in FIG. 4. In addition, a clock signal is input from a terminal SWCLK, and data on the firmware 60 is input from a terminal SWDIO. In this way, the firmware 60 is written in the non-volatile memory 54 of the control circuit 4. When the written firmware 60 is deleted, a signal is provided to a reset terminal NRST.

As described above, it is preferred to write the firmware 60 solely by the module 15. However, there is a case where modification of the firmware 60 becomes required after the module 15 is bonded to the detection sheet body 10. For such a case, as illustrated in FIG. 3, the terminals Q1 (SWCLK), Q2 (SWDIO), Q3 (NRST), Q4 (M3V3), and Q5 (GND) are provided. Therefore, the firmware 60 can be rewritten by using these terminals.

### 4. Others

(1) In the above embodiment, the LPWA wireless radio wave is used. However, another wireless method such as normal portable wireless communication may be used.
(2) In the above embodiment, the location information is also detected. However, it may only be detected that shipping has been made and that the shipment has been opened.
(3) In the above embodiment, the location data after the dispatch is detected at the predetermined time intervals. This is done to avoid the drainage of the button cell 2 possibly caused by the acquisition of the location data prior to the dispatch, which possibly interferes with tracking after the dispatch. However, in the case where the button cell 2 has sufficient capacity, the location data prior to the dispatch may be acquired. In this way, it is possible to acknowledge a route taken by the detection sheet body 10 before arriving at the recipient, and such information can be used for marketing and the like.
   In addition, even in the case where the processing to break the first breaking structure 6 is forgotten at the time of the dispatch, with the acquired location data, it is possible to estimate the dispatch time on the basis of the location data.
(4) In the above embodiment, the portion that is cut out at the time of the dispatch (the triangular area 61 in the above embodiment) is discarded. However, a unique number (which may be associated with the ID of the detection sheet body 10) may be printed on this portion and retained by the user as a shipping receipt.
(5) In the above embodiment, the paper is used as the thin board 11. However, a thin plastic material or the like may be used as long as the breaking structure of the material can easily be broken.
(6) In the above embodiment, the detection sheet body 10 and the envelope 70 are configured as separate components and are affixed to each other. However, a part of the envelope 70 may be patterned as the detection sheet body, and the envelope 70 and the detection sheet body may be configured as an integrated component.
(7) In the above embodiment, the tracking server apparatus 30 and the management server apparatus 35 are configured as separate server apparatuss. However, these servers may be configured as a single server apparatus.
(8) In the above embodiment, the description has been made on the case where the detection sheet body 10 is provided to the envelope 70. However, the provision of the detection sheet body 10 is not limited to the envelope, and the detection sheet body 10 can be provided to containers used for shipping in general, such as the cardboard box. In other words, the detection sheet body 10 only needs to be provided to the container such that the second breaking structure is broken at the time of opening.

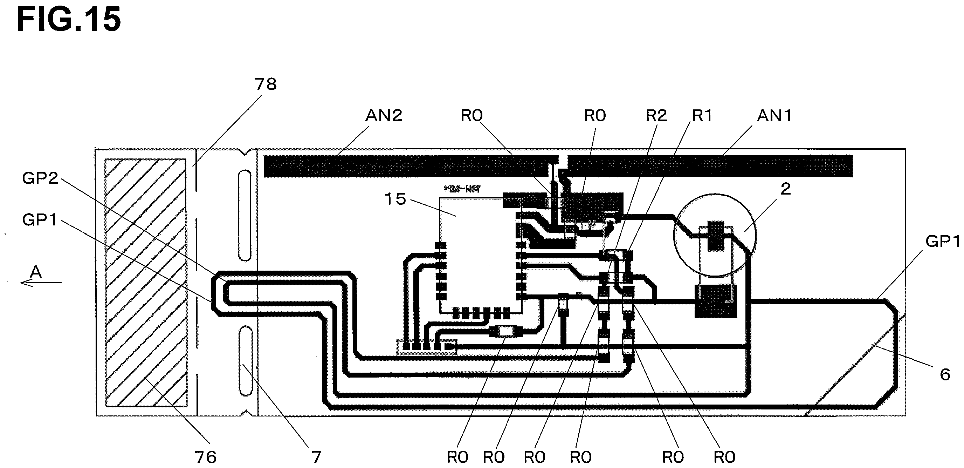

FIG. 15 illustrates a structure of the detection sheet body 10 that is configured for the cardboard box. A circuit diagram thereof is substantially the same as that in FIG. 4.

The ground pattern GP1 is cut on the perforation line 6 as the first breaking structure, and the ground pattern GP2 is cut by a vulnerable section 7 as the second breaking structure. A seal 76 is provided at an end from a fold line 78. The seal 76 is configured to be peelable, and an adhesive material appears when the seal 76 is peeled off. The vulnerable section 7 is notched or hollowed out such that, when a pulling force is applied in an arrow A direction, the detection sheet body 10 is broken from this portion. Preferably, the fold line 78 is printed as a guide line for folding and is not a perforation line. The fold line 78 may be easily foldable by the perforation line or the like. However, strength of the fold line 78 against the breakage is preferably increased when compared to the vulnerable section 7.

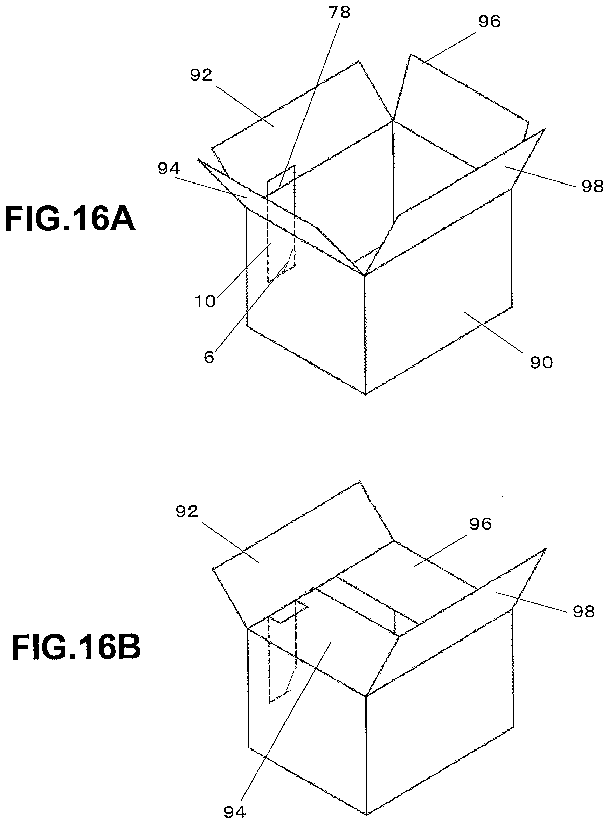

FIG. 16A illustrates processing in the case where this detection sheet body 10 is used to dispatch the package. The detection sheet body 10 is affixed to inside of a cardboard box 90. At this time, it is set that the fold line 78 matches a folded section of a flap 92.

The detection sheet body 10 may be affixed to the cardboard box 90 when the package is dispatched, or the cardboard box 90, to which the detection sheet body 10 has already been affixed, may be prepared in advance.

In the state illustrated in FIG. 16A, the content is packed in the cardboard box 90, and thereafter the detection sheet body 10 is cut on the perforation line 6. As a result, the shipping data is transmitted. Next, the flaps 92, 94, 96, 98 are closed. At this time, as illustrated in FIG. 16B, the seal 76 is peeled off, and the detection sheet body 10 is affixed to an upper surface of the flap 94.

Once the package is dispatched, the location is tracked by transmitting the life-or-death monitoring data at the predetermined time intervals.

When the package arrives and is opened, the flap 94 is opened. At this time, since the detection sheet body 10 is stretched over the upper surface of the flap 94, a force is applied in the arrow A direction illustrated in FIG. 15, causing breakage of the vulnerable section 7. As a result, the opening data is transmitted.

As it has been described so far, it is possible to detect shipping and opening in the same manner as the envelope. (9) In the above embodiment, shipping, opening, the location, and the like are transmitted. However, instead of or in addition to any of these, environmental information (a temperature, humidity, illuminance, or the like) may be acquired by a sensor and transmitted.

For example, a temperature sensor may be provided to the detection sheet body 10. Then, detection data can be transmitted (for example, transmitted when the life-or-death monitoring data is transmitted) at predetermined time intervals after the dispatch. In this way, it is possible to detect a temperature of the package during transportation, and such information can be used for transportation management of fresh food and the like.

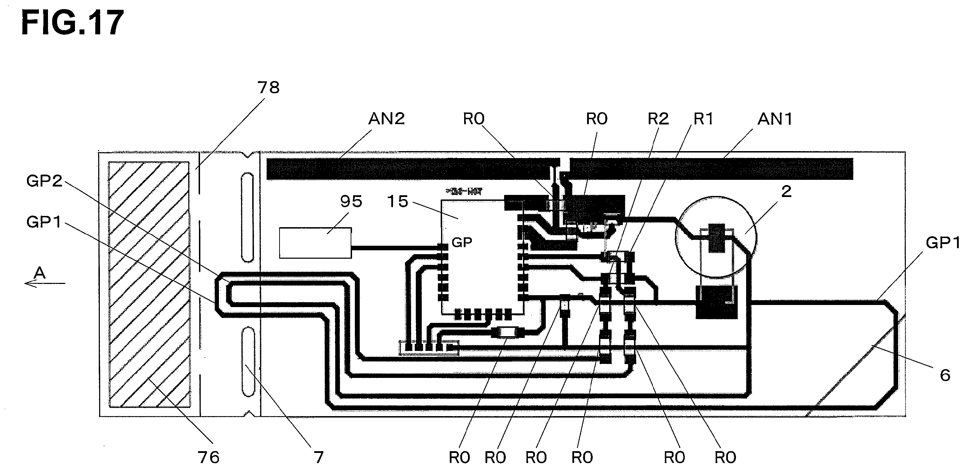

FIG. 17 illustrates a structure of the detection sheet body 10 provided with a temperature sensor 95. In the case where output data from the temperature sensor 95 is an analog signal, the analog signal has to be subject to A/D conversion and be imported as digital data. The module 15 (IFS-M01 manufactured by Innovation Farm, Inc.) used in the above embodiment has an A/D converter therein. When the analog signal is transmitted to an input terminal GP, the CPU 50 can acquire data digitized by the A/D converter. Consequently, the CPU 50 can transmit this data by the wireless transmission circuit 3.
(10) In the above embodiment, even when cutting of the perforation line 6 is forgotten at the time of the dispatch, the package can be opened by hand at the time of opening. However, the thin board 11 may be configured to be strong enough that the thin board 11 cannot be torn without the perforation line. In such a case, in the case where the perforation line 6 is not cut at the time of the dispatch, the triangular area 61 in FIG. 3 may not be torn by hand even when the perforation line 7 is cut at the time of opening. In regard to a merchandise that is purchased under a condition that the recipient knows a shipping date thereof in advance, the recipient can return the merchandise without opening the package.

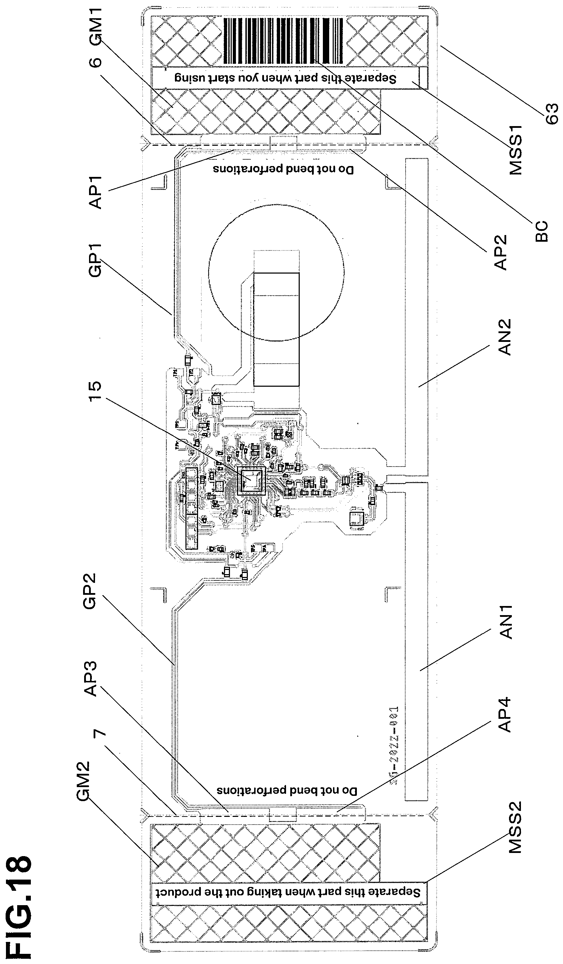

(11) FIG. 18 illustrates the detection sheet body 10 according to another example. In this example, a synthetic resin (for example, a polyethylene naphthalate (PEN) resin) is used as the thin board of the detection sheet body 10. The perforation line 6 that is broken at the time of activation is provided on a right side, and the perforation line 7 that is broken at the time of opening is provided on a left side. The ground patterns GM1, GM2 (connected to the ground), each of which is formed to have a mesh-like pattern, are respectively provided on outer sides of the perforation lines 6, 7 (that is, the thin board that is cut off by breakage). In this way, even when a finger or the like touches any of the ground patterns GM1, GM2 at the time of breakage by the perforation lines 6, 7, noise is less likely to occur, and thus erroneous operation by the noise can be prevented. In addition, a barcode BC is printed on the area 63 that is cut off on the perforation line 6 at the time of the activation. In the barcode BC, marks identifying this detection sheet body 10 are provided.

A reason why the ground patterns GM1, GM2 are each formed to have a linear pattern (mesh) is because a solid pattern increases a pattern area, which adversely affects the antennas AN1, AN2.

In addition, in this embodiment, even when the voltage of the terminal T1 in FIG. 2 becomes H, the CPU 50 does not immediately execute the processing in FIG. 11. This is because the voltage of the terminal T1 possibly becomes H due to the noise.

Accordingly, in this example, the CPU 50 does not immediately execute the processing illustrated in FIG. 11 even when the voltage of the terminal T1 becomes H and an external interrupt occurs. As will be described below, after the external interrupt, it is determined whether the voltage of the terminal T1 is H for the predetermined number of times at predetermined time intervals. Then, in the case where the voltage of the terminal T1 is H for all the predetermined number of times, the processing in FIG. 11 is executed.

When the voltage of the terminal T1 becomes H, and the external interrupt occurs, the CPU 50 of the detection sheet body 10 confirms such occurrence and enters the sleep mode. Thereafter, when a predetermined time (for example, 100 ms) has elapsed, the control circuit 4 of the detection sheet body 10 is resumed from the sleep mode by the timer interrupt and detects the voltage of the terminal T1. After checking the voltage of the terminal T1, the control circuit 4 of the detection sheet body 10 enters the sleep mode again. Thereafter, when the predetermined time (for example, 100 ms) has elapsed again, the voltage of terminal T1 is detected.

The processing described so far is repeated the predetermined number of times (for example, three times). Then, in the case where the voltage of the terminal T1 is "H" for all the predetermined number of times, the processing in FIG. 11 is executed. However, in the case where the voltage of the terminal T1 is not "H" at least once for the predetermined number of times, it is determined that the noise has occurred, and the CPU 50 of the detection sheet body 10 enters the sleep mode.

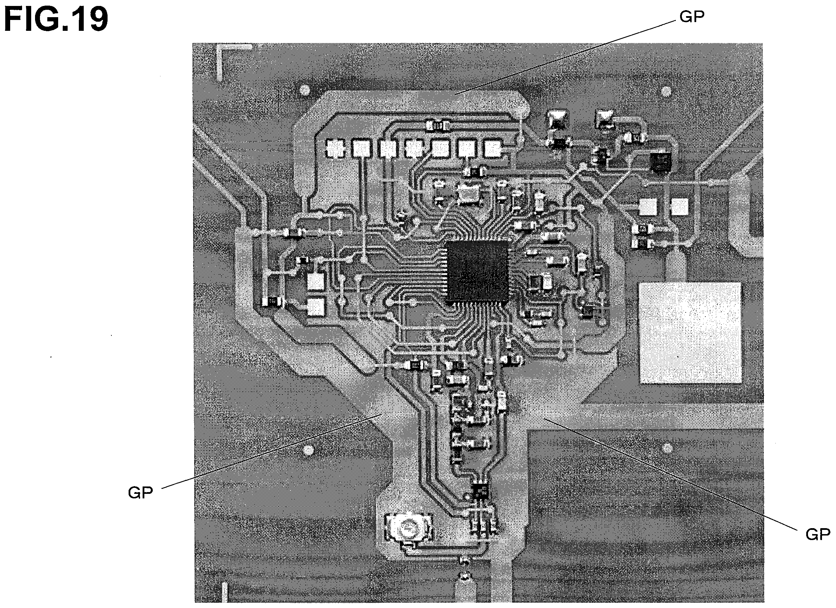

Also, in this example, as illustrated in FIG. 19, the circuit pattern is surrounded by the ground pattern GP. In this way, the effect of the noise is reduced.

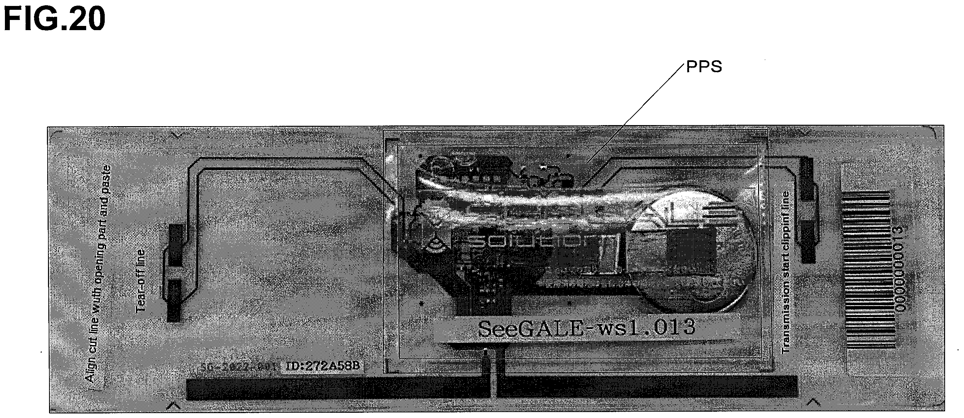

Furthermore, as illustrated in FIG. 20, a cover PPS that is made from polypropylene is provided in a central circuit pattern portion. Four corners of the cover PPS are bonded to the board. In this way, the central circuit pattern portion is protected.

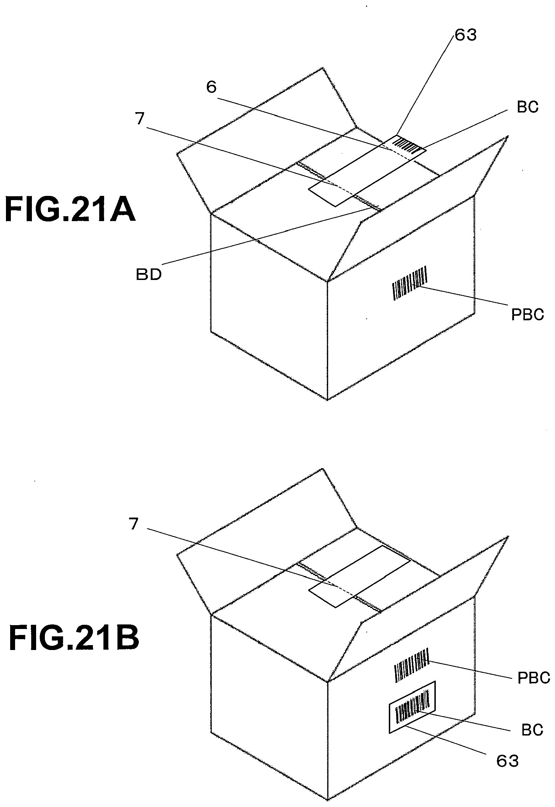

FIGs. 21A and 21B illustrate an example in which this detection sheet body 10 is used. For example, a description will be made on an example in which a product is accommodated and shipped in the cardboard box. At the time of the dispatch, the product is accommodated in the cardboard box, and an inner lid is then closed. In this state, a protective seal on a back surface of the detection sheet body 10 is peeled to expose an adhesive surface. Then, as illustrated in FIG. 21A, the detection sheet body 10 is affixed in a manner to match a boundary line BD of the inner lid.

Thereafter, the perforation line 6 is torn to separate the area 63, and the detection sheet body 10 is thereby activated. The barcode (an identifier) BC for identifying the detection sheet body 10 is printed in the area 63. Thus, this barcode BC is affixed near a barcode PBC, which is used to identify the product and is printed or otherwise attached to the cardboard box (FIG. 21B). In this way, it is easy to associate the product with the detection sheet body 10 by reading both of the barcodes BC, PBC with a barcode reader or the like. In addition, even in the case where the product barcode is not affixed to the cardboard box, it is easy to manage which detection sheet body 10 is used by affixing the barcode BC. Thereafter, the lid of the cardboard box is closed for shipping.

When the cardboard box arrives at the destination and the inner lid is opened, the perforation line 7 is broken. Thus, it is possible to confirm opening by the detection sheet body 10.

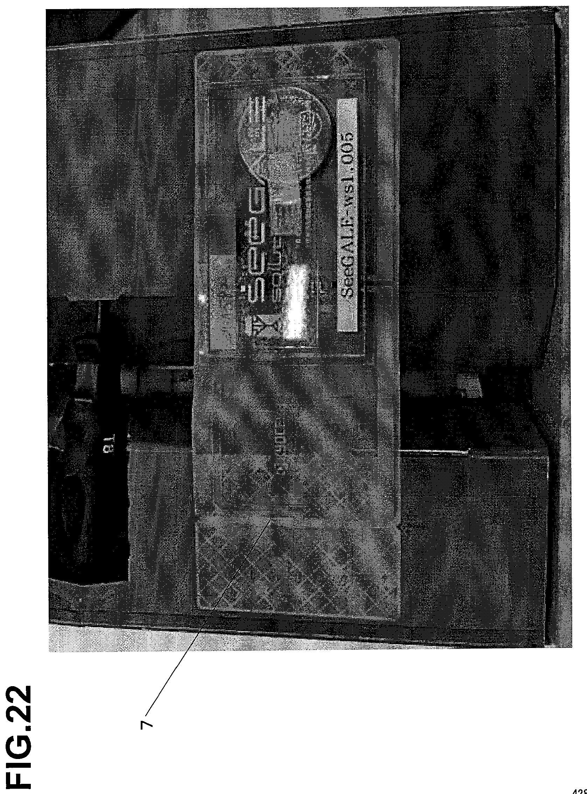

Here, as illustrated in FIG. 22, any structure can be adopted as long as the perforation line 7 has to be broken in order to take out the product.
(12) In the above embodiment, the processing to transmit the shipping data and the opening data is executed by the hardware interrupt processing. However, normal determination processing may be executed to transmit the shipping data and the opening data. The same applies to the timer interrupt.
(13) In the above embodiment, the vulnerable section that is provided with the perforation line or a hole is used as the breaking structure. However, another type of the breaking structure such as a series of half-deep cuts in a thickness direction may be used as long as such a structure can be broken.
(14) In the above embodiment, the description has been made on the example in which the container has the breaking structure. However, a wrapper (a plastic wrapper or the like) that wraps the container may be provided with the breaking structure.
(15) The modified examples described above can be implemented in combination with each other.

## Claims

1. A detection sheet body comprising:
a wireless transmission circuit that is provided on a breakable thin board to transmit a status signal to a mobile communication base station;
a control circuit that is provided on the thin board, controls and causes the wireless transmission circuit to transmit a state signal indicating shipping according to a voltage applied to a first terminal, and controls and causes the wireless transmission circuit to transmit a state signal indicating opening according to a voltage applied to a second terminal;
a battery cell that is provided on the thin board to supply the voltage to the wireless transmission circuit and the control circuit;
first sheet wiring that is provided on the thin board to connect the first terminal and the battery cell;
second sheet wiring that is provided on the thin board to connect the second terminal and the battery cell;
a first breaking structure that is provided to the thin board in order to fluctuate the voltage of the first terminal by cutting the first sheet wiring; and
a second breaking structure that is provided to the thin board in order to fluctuate the voltage of the second terminal by cutting the second sheet wiring.

2. The detection sheet body according to claim 1, **characterized in that**
the thin board is paper or a film made from a synthetic resin,
each of the first sheet wiring and the second sheet wiring is printed wiring that is formed by printing on the paper or the film made from the synthetic resin, and
each of the first breaking structure and the second breaking structure is a perforation line provided to the paper or the printed wiring.

3. The detection sheet body according to claim 2, **characterized in that**
the printed wiring is formed near the perforation line in a manner to be wide in an extending direction of the perforation line.

4. The detection sheet body according to claim 2 or 3, **characterized in that**
an electrode that is connected to ground is formed on the thin board, which is cut off by the first breaking structure, and the thin board, which is cut off by the second breaking structure.

5. The detection sheet body according to claim 4, **characterized in that**
the electrode that is connected to the ground is configured to have a linear pattern.

6. The detection sheet body according to claim 2 or 3, **characterized in that**
a code that is formed by coating a mark for identifying the detection sheet body is printed on the thin board that is cut off by the first breaking structure.

7. The detection sheet body according to claim 2 or 3, **characterized in that**
a perforation line structure as the first breaking structure and a perforation line structure as the second breaking structure are provided in different directions, and
the perforation line structure as the second breaking structure is configured that at least one end thereof does not reach an edge of the paper but reaches a new edge that is formed by removing a part of the paper by the perforation line structure as the first breaking structure.

8. An envelope comprising:
the detection sheet body according to claim 2 or 3; and
a breaking structure for opening, wherein
the detection sheet body is fixed such that the breaking structure for opening overlaps the perforation line structure as the second breaking structure of the detection sheet body.

9. A container comprising:
the detection sheet body according to claim 2 or 3; and
a lid, wherein
the detection sheet body is fixed such that, when the lid is opened, the perforation line structure as the second breaking structure of the detection sheet body is broken.

10. The detection sheet body according to claim 1, **characterized in that**
each of the first terminal and the second terminal is a hardware interrupt terminal, and
the control circuit is configured to only monitor the hardware interrupt terminal until a predetermined signal is input to the hardware interrupt terminal.

11. The detection sheet body according to claim 1, **characterized in that**
in a period from transmission of the state signal indicating shipping to transmission of at least the state signal indicating opening, the control circuit controls and causes the wireless transmission circuit to transmit, at predetermined time intervals, a state signal indicating that the detection sheet body is operated.

12. The detection sheet body according to claim 1, **characterized in that**
in a period from transmission of the state signal indicating shipping to transmission of at least the state signal indicating opening, the control circuit controls and causes the wireless transmission circuit to transmit, at predetermined time intervals, a state signal that is used to estimate a current location of the detection sheet body.

13. The detection sheet body according to claim 1, **characterized in that** the detection sheet body further comprises:
a sensor that measures environment around the detection sheet body, wherein
in a period from transmission of the state signal indicating shipping to transmission of at least the state signal indicating opening, the control circuit controls and causes the wireless transmission circuit to transmit, at predetermined time intervals, a state signal indicating a measurement result by the sensor.

14. A state detection system comprising:
a detection sheet body that is accommodated in or fixed to a container and has a wireless transmission circuit; and
a server apparatus capable of directly or indirectly acquiring a state signal from the wireless communication circuit, wherein
the detection sheet body includes:
the wireless transmission circuit that is provided on a breakable thin board to transmit a status signal to a mobile communication base station;
a control circuit that is provided on the thin board, controls and causes the wireless transmission circuit to transmit a state signal indicating shipping according to a voltage applied to a first terminal, controls and causes the wireless transmission circuit to transmit a state signal indicating opening according to a voltage applied to a second terminal, and controls and causes the wireless transmission circuit to transmit, at predetermined time intervals, a state signal used to estimate a current location of the detection sheet body in a period from transmission of the state signal indicating shipping to transmission of at least the state signal indicating opening;
a battery cell that is provided on the thin board to supply the voltage to the wireless transmission circuit and the control circuit;
first sheet wiring that is provided on the thin board to connect the first terminal and the battery cell;
second sheet wiring that is provided on the thin board to connect the second terminal and the battery cell;
a first breaking structure that is provided to the thin board in order to fluctuate the voltage of the first terminal by cutting the first sheet wiring; and
a second breaking structure that is provided to the thin board in order to fluctuate the voltage of the second terminal by cutting the second sheet wiring, and
the server apparatus includes:
shipping recording means for receiving the state signal indicating shipping and recording, in a recording section, that the detection sheet body is in a shipped state in association with the detection sheet body along with date and time;
transportation recording means for recording, in the recording section, that the detection sheet body is in a transported state in association with the detection sheet body along with a current location, which is based on a state signal used to estimate the current location, and the date and time in a period from reception of the state signal indicating shipping to reception of the state signal indicating opening;
opening recording means for receiving the state signal indicating opening and recording, in the recording section, that the detection sheet body is in an opened state in association with the detection sheet body along with the date and time; and
transmission means for transmitting a state of the detection sheet body recorded in the recording section to a terminal apparatus.

15. A server apparatus comprising:
shipping recording means for receiving a state signal indicating shipping from a detection sheet body via a mobile communication base station and recording, in a recording section, that the detection sheet body is in a shipped state in association with the detection sheet body along with date and time;
transportation recording means for recording, in the recording section, that the detection sheet body is in a transported state in association with the detection sheet body along with a current location, which is based on a state signal used to estimate the current location, and the date and time in a period from reception of the state signal indicating shipping from the detection sheet body via the mobile communication base station to reception of the state signal indicating opening via the mobile communication base station; and
opening recording means for receiving a state signal indicating opening from the detection sheet body via the mobile communication base station and recording, in the recording section, that the detection sheet body is in an opened state in association with the detection sheet body along with date and time; and
transmission means for transmitting a state of the detection sheet body recorded in the recording section to a terminal apparatus.
